# EUROPÄISCHE PATENTANMELDUNG

(11) **EP 0 976 622 A2**
(43) Veröffentlichungstag der Anmeldung: **02.02.2000**
(21) Anmeldenummer: 99111455.4
(22) Anmeldetag: 12.06.1999
(51) Int. Cl.: B60R 21/20

(54) **Instrumententafel für ein Kraftfahrzeug**

(30) Priorität: 30.07.1998 DE 19834384
(71) Anmelder: DaimlerChrysler AG, 70567 Stuttgart (DE)
(72) Erfinder: Henkel, Jörg, 73033 Göppingen (DE)

(57) **Zusammenfassung**

Es ist bekannt, eine Airbagklappe innerhalb einer Instrumententafel mit Hilfe eines Fangbandes in einer begrenzten Ausstellposition zurückzuhalten.

Erfindungsgemäß sind zur Sicherung der Airbagklappe in einer begrenzten Ausstellposition mehrere, sich jeweils zumindest annähernd längs einer zugeordneten Seitenkante des Durchtrittes in dem Formteil erstreckende Flächengebildeabschnitte vorgesehen, die an einer Innenseite der Airbagklappe einerseits und an einer Innenseite des Formteiles andererseits angeordnet sind.

Einsatz für beifahrerseitige Airbaganordnungen im Personenkraftwagen.

## Beschreibung

Die Erfindung betrifft eine Instrumententafel für ein Kraftfahrzeug mit einem schalenartigen Formteil, in dem ein polygonaler Durchtritt für einen Airbag vorgesehen ist, wobei der Durchtritt durch eine mit dem Formteil verbundene Airbagklappe verschlossen ist, und wobei die Airbagklappe durch sich zwischen Airbagklappe und Formteil erstreckende Fangmittel bei einer Expansion des Airbags in einer zu dem Formteil abragenden Ausstellposition zurückgehalten wird.

Eine solche Instrumententafel ist aus der EP 0 364 714 A2 bekannt. Die Instrumententafel weist ein schalenartiges Formteil aus Kunststoff auf, das die Außenkontur der Instrumententafel im Fahrzeuginnenraum definiert. Das Formteil weist auf einer Beifahrerseite eine Aussparung auf, die einen Durchtritt für einen Airbag einer Beifahrerairbaganordnung bildet. Die Aussparung ist durch eine Airbagklappe in der zusammengefalteten Ruheposition des Airbags verschlossen, wobei die Airbagklappe umlaufend mit einem Randbereich des Durchtrittes verbunden ist. Bei einer Auslösung und schlagartigen Expansion des Airbags reißt die Airbagklappe auf. Die Airbagklappe wird durch wenigstens ein Fangband in einer schräg nach außen gerichteten Ausstellposition zurückgehalten, wobei das Fangband dazu dient, die Airbagklappe in einer begrenzten Ausstellposition bei einer Expansion des Airbags zurückzuhalten. Beim Aufreißen der Airbagklappe können Schnittkanten an der Airbagklappe selbst oder am Randbereich der den Durchtritt bildenden Aussparung des Formteiles entstehen, die zu Beschädigungen der Airbaghaut bei der Expansion des Airbags führen können.

Aufgabe der Erfindung ist es, eine Instrumententafel der eingangs genannten Art zu schaffen, die eine sichere Entfaltung eines Airbags ermöglicht.

Diese Aufgabe wird dadurch gelöst, daß die Airbagklappe an ihrer dem Airbag zugewandten Innenseite mit einer als Fangmittel dienenden, flexiblen Flächengebildeanordnung versehen ist, die eine gegenüber der Anzahl von Seitenkanten der Airbagklappe reduzierte Anzahl von Flächengebildeabschnitten aufweist, die sich jeweils zumindest annähernd längs einer zugeordneten Seitenkante des Durchtrittes erstrecken und mit einer Innenseite der Airbagklappe einerseits und mit einer Innenseite des Formteiles andererseits verbunden sind, wobei die Flächengebildeabschnitte wenigstens an zwei gegenüberliegenden Seiten zwischen den Verbindungsstellen in der geschlossenen Ruheposition der Airbagklappe mit einem losen Flächenbereich versehen sind, der in der Ausstellposition jeweils die zugeordnete Seitenkante des Durchtrittes überdeckt. Die Flächengebildeabschnitte können dabei voneinander getrennte Zuschnitte aufweisen oder auch als gemeinsamer, einstückiger Zuschnitt gestaltet sein. Bei einem viereckigen Durchtritt und einer viereckigen Airbagklappe werden somit drei Seiten durch die Flächengebildeabschnitte abgedeckt, so daß die Flächengebildeabschnitte bei geöffneter Airbagklappe an drei Seiten die jeweiligen Schnitt- oder Reißkanten des Durchtrittes überdecken. Beschädigungen des Airbags in diesen Bereichen werden daher vermieden. Die verbleibende, nicht mit einem Flächengebildeabschnitt versehene Seite dient zum Austritt des Airbags. Die Flächengebildeabschnitte bilden eine Leitvorrichtung für den expandierenden Airbag. Als flexible Flächengebildeabschnitte können Kunststoffolien, Metallgewebe, Gewebe oder andere Textilprodukte vorgesehen sein. Falls die entsprechenden Flächengebildeabschnitte nicht ohnehin bereits eine gute Gleitwirkung für den expandierenden Airbag bilden, können sie auch noch mit einer ein Entlanggleiten des Airbags verbessernden Beschichtung versehen sein.

In Ausgestaltung der Erfindung sind die losen Flächenbereiche der beiden gegenüberliegenden Flächengebildeabschnitte in Öffnungsrichtung der Airbagklappe jeweils mit einer kürzeren und einer längeren Seitenkante versehen, so daß sich eine schräge Ausrichtung der Airbagklappe relativ zum Durchtritt des Formteiles ergibt. Dadurch wird die gewünschte Aufklappfunktion und die daraus resultierende Leitfunktion der Airbagklappe für die Expansion des Airbags erreicht. Für ein definiertes Öffnen der Airbagklappe sind daher die beiden gegenüberliegenden Flächengebildeabschnitte ausreichend. Eine weitere Scharnieranordnung zum Klappen der Airbagklappe wird nicht zwingend benötigt.

In weiterer Ausgestaltung der Erfindung ist ein dritter, zwischen den gegenüberliegenden Flächengebildeabschnitten angeordneter Flächengebildeabschnitt als Scharnieranordnung für eine Klappfunktion der Airbagklappe gestaltet, wobei sich der Flächengebildeabschnitt über nahezu die gesamte Länge der zugeordneten Seitenkante des Durchtrittes erstreckt. Dieser Flächengebildeabschnitt weist somit eine Doppelfunktion auf, da er zum einen die Scharnieranordnung bildet und zum anderen derart an den Innenseiten der Airbagklappe und des Randbereiches des Durchtrittes verlegt ist, daß er die Schnitt- oder Reißkante beim Aufreißen der Airbagklappe in Richtung zum Airbag hin überdeckt.

In weiterer Ausgestaltung der Erfindung weist der die Scharnieranordnung bildende Flächengebildeabschnitt einen losen Flächenbereich auf. Dadurch wird die Airbagklappe über ihren gesamten Umfang vom Randbereich des Durchtrittes nach außen entfernt, wodurch ein weiter verbesserter Austritt für den sich entfaltenden Airbag erzielbar ist. Die Abdeckfunktion für die Kantenbereiche des Durchtrittes und der Airbagklappe durch die Flächengebildeabschnitte bleibt erhalten.

In weiterer Ausgestaltung der Erfindung sind die Flächengebildeabschnitte durch wenigstens einen Zuschnitt aus textilem Material, insbesondere Gewebe, gebildet. Dies ist eine besonders einfache und funktionssichere Ausgestaltung, wobei die entsprechenden Materialien sehr reißfest und zumindest weitgehend unelastisch gestaltet sind. Dennoch können an den Flächengebildeabschnitten auch Reiβnähte vorgesehen werden, die bei einer vorherbestimmbaren Zugbelastung aufreißen, wodurch das Öffnen der Airbagklappe zu beeinflussen ist.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt schematisch in perspektivischer Darstellung einen beifahrerseitigen Teil einer Ausführungsform einer erfindungsgemäßen Instrumententafel im Innenraum eines Personenkraftwagens,
- Fig. 2: eine Draufsicht auf den Teil der Instrumententafel nach Fig. 1 in Richtung des Pfeiles II in Fig. 1,
- Fig. 3: in wesentlich vergrößerter Darstellung einen Schnitt durch die Instrumententafel nach Fig. 2 entlang der Schnittlinie III-III in Fig. 2,
- Fig. 4 bis 6: in gegenüber der Darstellung nach Fig. 3 verkleinerter Darstellung schematische Schnitte durch die Instrumententafel nach Fig. 2 entlang den Schnittlinien IV-IV, V-V und VI-VI in Fig. 2,
- Fig. 7: schematisch in einer Seitenansicht eine Darstellung einer Airbagklappe relativ zu einem Formteil der Instrumententafel in geöffnetem Zustand,
- Fig. 8: in einer Darstellung entsprechend Fig. 7 eine weitere Airbagklappe, die in einer gegenüber der Darstellung nach Fig. 7 weiter geöffneten Position gehalten ist,
- Fig. 9: eine weitere Airbagklappe ähnlich den Fig. 7 und 8 in einer dritten Öffnungsposition ähnlich Fig. 7,
- Fig. 10: in vergrößerter perspektivischer Darstellung eine Airbagklappe in geschlossener Ruheposition, und
- Fig. 11: die Airbagklappe nach Fig. 10 in geöffneter Ausstellposition.

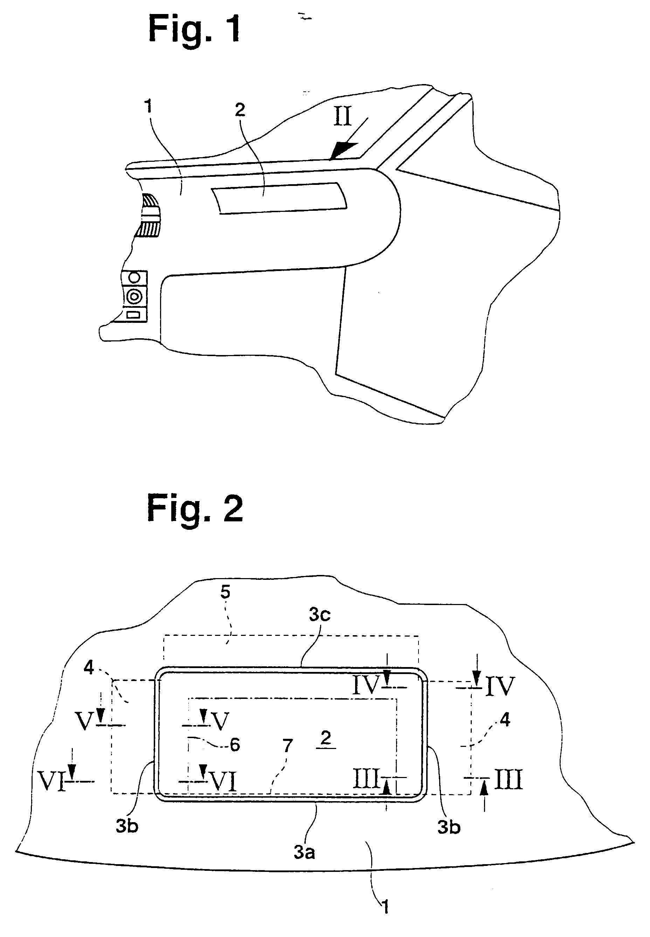

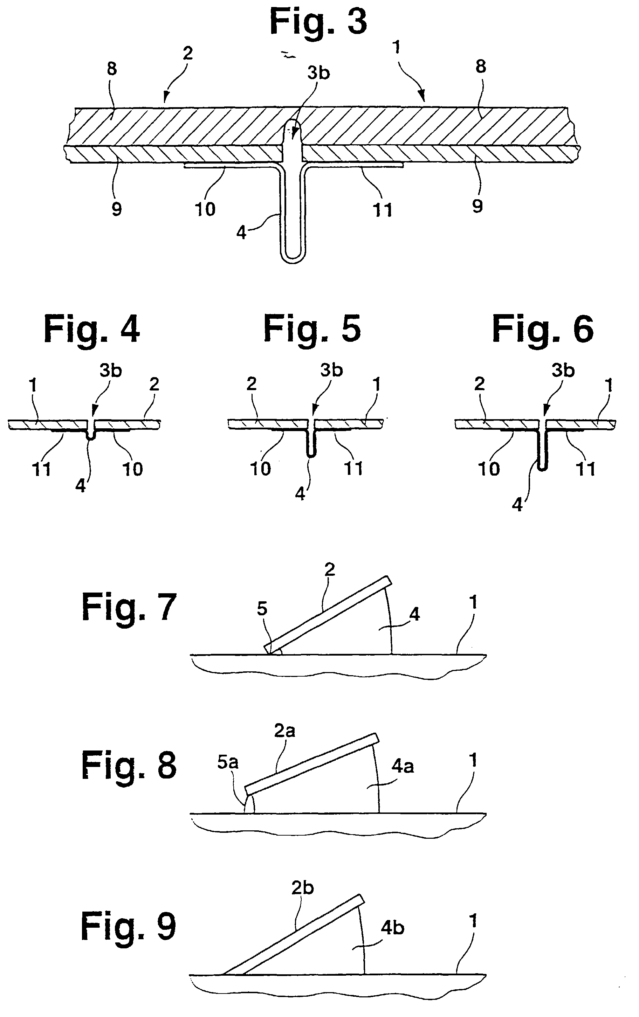

Ein Personenkraftwagen weist gemäß Fig. 1 in seinem Fahrzeuginnenraum eine Instrumententafel auf, die durch ein schalenartiges Formteil 1 gebildet wird, das die Kontur der Instrumententafel definiert. Die Instrumententafel kann durch ein Formteil 1 oder durch mehrere schalenartige Formteile 1 aufgebaut sein. Das schalenartige Formteil 1 ist in an sich bekannter Weise über entsprechende Tragstrukturen mit der Fahrzeugkarosserie verbunden. Das schalenartige Formteil 1 ist im Bereich der dargestellten Beifahrerseite mit einer Airbagklappe 2 versehen, die als Abdeckung eines Durchtrittes in dem Formteil 1 gestaltet ist. Dabei können das Formteil 1 und die Airbagklappe 2 aus dem gleichen Material hergestellt sein, wobei beide jeweils eine Trägerschale 9 sowie einen die Trägerschale 9 überziehenden Kunststoffschaum 8 aufweisen können(Fig. 3). Die Trägerschale 9 der Airbagklappe 2 ist in einem umlaufenden, beim dargestellten Ausführungsbeispiel rechteckigen Randbereich von der Trägerschale 9 des Formteiles 1 getrennt. Der Kunststoffschaum 8 ist auch im Übergangsbereich zwischen Randbereich des Durchtrittes und Seitenkanten der Airbagklappe 2 vorgesehen (Fig. 3) und ist zusätzlich noch durch eine geeignete Außenhautfolie überzogen.

Unterhalb der Airbagklappe 2 und damit unterhalb des Durchtrittes in dem Formteil 1 ist in an sich bekannter Weise eine Beifahrerairbageinheit angeordnet. Der Durchtritt in dem Formteil ermöglicht die schlagartige Expansion eines Airbags der Beifahrerairbageinheit bei einem Fahrzeugaufprall. Bei einer solchen schlagartigen Expansion wird die Airbagklappe 2 aufgerissen, da der bereits mit Sollbruchlinien versehene Kunststoffschaum einer Expansion des Airbags keine ausreichenden Rückhaltekräfte für die Airbagklappe 2 mehr aufbringen kann.

Damit die Airbagklappe 2 bei einem Aufreißen durch eine Expansion des Airbags nicht unkontrolliert im Fahrzeug herumgeschleudert wird, bleibt sie mit Hilfe mehrerer Flächengebildeabschnitte 4, 5 mit dem Formteil 1 verbunden. Die Flächengebildeabschnitte sind flexibel, reißfest und weitgehend unelastisch gestaltet und beim dargestellten Ausführungsbeispiel als Gewebezuschnitt ausgeführt. Dabei sind alle drei Flächengebildeabschnitte 4, 5 beim dargestellten Ausführungsbeispiel durch einen gemeinsamen Gewebezuschnitt gebildet. Die Kontur kann gemäß Fig. 2 längs der strichpunktierten Linie 6 oder längs der gestrichelten Linie 7 verlaufen. Im zweitgenannten Fall deckt der Gewebezuschnitt somit die gesamte Unterseite der Airbagklappe 2 ab. Im erstgenannten Fall ist er lediglich im Bereich der nachfolgend näher beschriebenen Seitenkanten der Airbagklappe 2 angeordnet. Die Flächengebildeabschnitte können in gleicher Weise jedoch durch drei voneinander getrennte Flächengebilde gestaltet sein.

Die Flächengebildeabschnitte 4, 5 sind im Bereich von gegenüberliegenden Seitenkanten 3b sowie im Bereich einer rückseitigen längsverlaufenden Seitenkante 3c angeordnet. Eine frontseitige Längskante 3a bleibt frei, da in diesem Bereich die Austrittsöffnung für den Airbag entsteht.

Die Flächengebildeabschnitte 4, 5 sind jeweils an einer Innenseite der Airbagklappe 2 bzw. des Formteiles 1 gemäß den Fig. 3 bis 6 angeordnet. Dabei bildet der rückseitige Flächengebildeabschnitt 5 eine Scharnieranordnung für die Airbagklappe 2, wobei der Flächengebildeabschnitt 5 sich über nahezu die gesamte Länge der Airbagklappe 2 erstreckt. Die Flächengebildeabschnitte 4 erstrecken sich über nahezu die gesamte Breite der Airbagklappe 2 (Fig. 2). Die Flächengebildeabschnitte 4, 5 sind mit einem eine erste Verbindungsstelle bildenden Flächenbereich flächig mit einer Unterseite der Airbagklappe 2 und mit dem anderen, eine zweite Verbindungsstelle bildenden Flächenbereich flächig mit einer Unterseite im Randbereich des Formteiles 1 um den Durchtritt herum verklebt. Die Verbindung der Flächengebildeabschnitte 4, 5 mit den Unterseiten der Airbagklappe 2 und des Formteiles 1 kann jedoch auch in anderer Art und Weise gestaltet sein. So können die Flächengebildeabschnitte stoffschlüssig, kraft- oder formschlüssig mit dem Formteil und der Airbagklappe verbunden sein. Sie können auch mit ihren entsprechenden Flächenbereichen in die Materialien der Airbagklappe und des Formteiles eingebettet sein.

Auf den beiden, den als Scharnieranordnung dienenden Flächengebildeabschnitt 5 flankierenden Breitseiten der Airbagklappe 2 sind die beiden gegenüberliegenden Flächengebildeabschnitte 4 mit ihren Verbindungsstellen 10, 11 derart an der Unterseite der Airbagklappe 2 und der Unterseite des Formteiles 1 angeordnet, daß der verbleibende lose Flächenbereich des Flächengebildeabschnittes 4 zwischen den Verbindungsstellen 10, 11 eine nach unten hängende Falte ergibt. Diese Falte reduziert sich von der frontseitigen Stirnkante aus linear nach hinten bis zum Bereich der Scharnieranordnung in ihrer Länge und damit in ihrer Tiefe, wie insbesondere anhand der Fig. 4 bis 6 und 10 erkennbar ist. Der lose Flächenbereich weist somit jeweils eine kurze und eine lange Seitenkante auf. Diese lose herabhängenden Flächenbereiche der Flächengebildeabschnitte 4 gewährleisten somit bei einem Öffnen der Airbagklappe 2 eine schräge Aufstellung der Airbagklappe 2 nach oben (Fig. 7, 9, 11), wodurch ein Austritt des Airbags durch die gebildete Öffnung gewährleistet wird. Dabei kann der Flächengebildeabschnitt 5, der die Scharnieranordnung bildet, entweder gemäß Fig. 7 derart gestaltet sein, daß sich der Flächengebildeabschnitt 5 um die Schnittkante des Randbereiches 3c des Formteiles 9 herumlegt, so daß die Airbagklappe 2 sich auch mit ihrem rückseitigen Kantenbereich um einen geringen Betrag nach oben anheben kann. Sie kann jedoch auch gemäß Fig. 9 so gestaltet sein, daß die rückseitige Längskante im Randbereich 3c der Airbagklappe 2b auf Höhe des Randbereiches verbleibt.

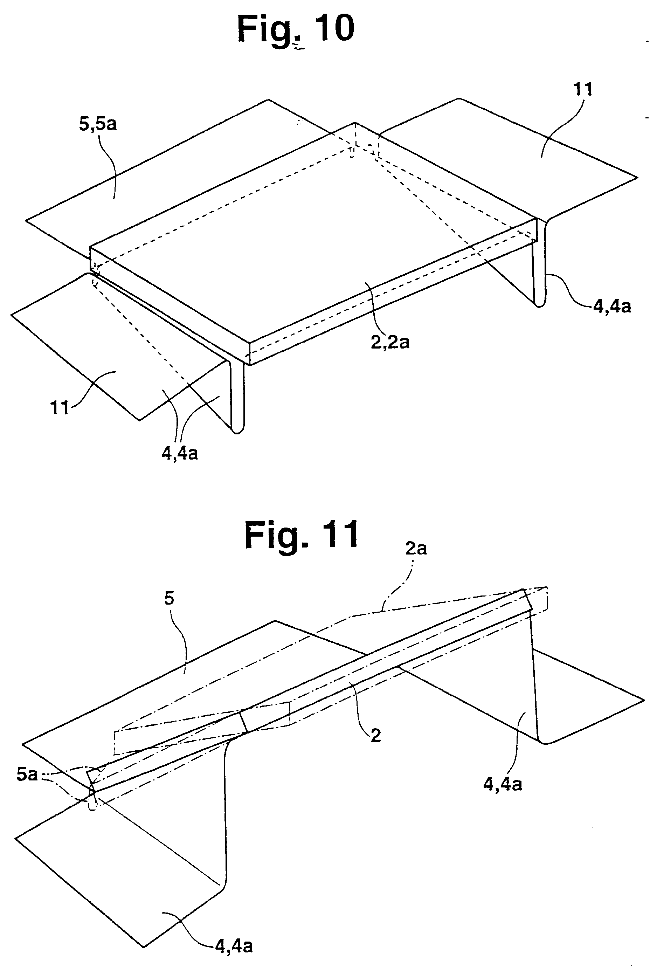

Schließlich kann auch der Flächengebildeabschnitt 5a gemäß Fig. 8 und 11 mit einem lose, d.h. schlaff herabhängenden Flächenbereich in der Ruheposition der Airbagklappe 2, 2a versehen sein, so daß die Airbagklappe 2a sich gemäß Fig. 8 auch im Bereich des Flächengebildeabschnittes 5a gegenüber dem Formteil 1 nach oben abhebt. Die Seitenkanten des losen Flächenbereiches des Flächengebildeabschnittes 5a sind dabei gleichlang, so daß die zugeordnete rückseitige Längskante der Airbagklappe 2a sich parallel zu der Längskante des Durchtrittes abhebt. In diesem Fall sind die seitlichen Flächengebildeabschnitte 4a mit trapezförmigen freien Flächenbereichen versehen. In den beiden anderen Fällen sind diese freien Flächenbereiche etwa dreieckig gestaltet. Da sich auch die Flächengebildeabschnitte 4, 4a, 4b über nahezu die gesamte Länge der jeweiligen Kante des Randbereiches des Durchtrittes und der Airbagklappe 2, 2a, 2b erstrecken, bilden diese Flächengebildeabschnitte 4, 4a, 4b auch in den gegenüberliegenden Seitenbereichen eine die entsprechenden Schnittkanten abdeckende Führung für den sich entfaltenden Airbag.

An den Flächengebildeabschnitten 4, 5, 4a, 5a, 4b können zusätzliche Reißnähte vorgesehen werden, durch deren gezieltes und vorbestimmbares Aufreißen bei der Aufklappbewegung der Airbagklappe 2, 2a, 2b die Öffnung der Airbagklappe beeinflußbar ist.

## Patentansprüche

1. Instrumententafel für ein Kraftfahrzeug mit einem schalenartigen Formteil, in dem ein polygonaler Durchtritt für einen Airbag vorgesehen ist, wobei der Durchtritt durch eine mit dem Formteil verbundene Airbagklappe verschlossen ist, und wobei die Airbagklappe durch sich zwischen Airbagklappe und Formteil erstreckende Fangmittel bei einer Expansion des Airbags in einer zu dem Formteil abragenden Aussteilposition zurückgehalten wird,
**dadurch gekennzeichnet,**
daß die Airbagklappe (2, 2a, 2b) an ihrer dem Airbag zugewandten Innenseite mit einer als Fangmittel dienenden, flexiblen Flächengebildeanordnung (4, 5; 4a, 5a; 4b) versehen ist, die eine gegenüber der Anzahl von Seitenkanten der Airbagklappe (2, 2a, 2b) reduzierte Anzahl von Flächengebildeabschnitten (4, 4a, 4b, 5, 5a) aufweist, die sich jeweils zumindest annähernd längs einer zugeordneten Seitenkante (3b, 3c) des Durchtrittes erstrecken und mit einer Innenseite der Airbagklappe (2, 2a, 2b) einerseits und mit einer Innenseite des Formteiles (1) andererseits verbunden sind, wobei die Flächengebildeabschnitte (4, 4a, 4b) wenigstens an zwei gegenüberliegenden Seiten zwischen den Verbindungsstellen in der geschlossenen Ruheposition der Airbagklappe (2, 2a, 2b) mit einem losen Flächenbereich versehen sind, der in der Ausstellposition jeweils die zugeordnete Seitenkante des Durchtrittes überdeckt.

2. Instrumententafel nach Anspruch 1,
**dadurch gekennzeichnet,**
daß die losen Flächenbereiche der beiden gegenüberliegenden Flächengebildeabschnitte (4, 4a, 4b) in Öffnungsrichtung der Airbagklappe (2) jeweils gegenüberliegend mit einer kürzeren und einer längeren Seitenkante versehen sind, so daß sich eine schräge Ausrichtung der Airbagklappe (2, 2a, 2b) relativ zum Durchtritt des Formteiles (1) ergibt.

3. Instrumententafel nach Anspruch 1,
**dadurch gekennzeichnet,**
daß ein dritter, zwischen den gegenüberliegenden Flächengebildeabschnitten (4, 4a, 4b) angeordneter Flächengebildeabschnitt (5, 5a) als Scharnieranordnung für eine Klappfunktion der Airbagklappe gestaltet ist, wobei sich der Flächengebildeabschnitt (5, 5a) über nahezu die gesamte Länge der zugeordneten Seitenkante des Durchtrittes erstreckt.

4. Instrumententafel nach Anspruch 3,
**dadurch gekennzeichnet,**
daß der die Scharnieranordnung bildende Flächengebildeabschnitt (5a) einen losen Flächenbereich aufweist, durch den die Airbagklappe (2, 2a, 2b) vom Formteil (1) abhebbar ist.

5. Instrumententafel nach Anspruch 1,
**dadurch gekennzeichnet,**
daß die Flächengebildeabschnitte (4, 4a, 4b, 5, 5a) durch wenigstens einen Zuschnitt aus textilem Material, insbesondere Gewebe, gebildet sind.

6. Instrumententafel nach Anspruch 1,
**dadurch gekennzeichnet,**
daß an einem Flächengebildeabschnitt (4, 4a, 4b, 5, 5a) mindestens eine Reißnaht mit vorherbestimmbarem Reißverhalten ausgebildet ist.
